(19) Europäisches Patentamt
European Patent Office
Office européen des brevets

(11) EP 3 550 274 A1

(12) EUROPÄISCHE PATENTANMELDUNG

(43) Veröffentlichungstag:
09.10.2019 Patentblatt 2019/41

(51) Int Cl.:
*G01K 17/20* (2006.01)

(21) Anmeldenummer: 19166763.3

(22) Anmeldetag: 02.04.2019

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(30) Priorität: 06.04.2018 DE 102018108185

(71) Anmelder: Isolierungen Leipzig GmbH
04129 Leipzig (DE)

(72) Erfinder:
• MALUCK, Jochen
  04509 Wiedemar OT Lissa (DE)
• Der weitere Erfinder hat auf sein Recht verzichtet, als solcher bekannt gemacht zu werden.

(74) Vertreter: Maikowski & Ninnemann
Patentanwälte Partnerschaft mbB
Postfach 15 09 20
10671 Berlin (DE)

(54) MESSEINRICHTUNG UND VERFAHREN ZUR BESTIMMUNG DER ENERGIEEFFIZIENZ EINER VORRICHTUNG

(57) Die Erfindung betrifft eine Messeinrichtung (10) zur Bestimmung der Energieeffizienz einer Vorrichtung, aufweisend ein Messgerät (50), eine Ummantelung (30) für die Vorrichtung, mindestens drei Temperaturfühler (11, 12, 13), einen Windmesser (70), und einen Luftfeuchtesensor (60). In weiteren Ausgestaltungen der Erfindung weist das Messgerät (50) einen Mikrocontroller, ein Speichermedium, eine Echtzeituhr und optional ein Display (80) auf sowie ein Modul für eine Datenverbindung auf. Die Erfindung stellt außerdem ein Verfahren zur Bestimmung der Energieeffizienz einer Vorrichtung unter Verwendung der Messeinrichtung (10) bereit.

FIG 2

**Beschreibung**

**Gebiet der Erfindung**

Die Erfindung ermöglicht es, die von einer eingebauten Wärme- oder Kältedämmung gesparte Energie genau zu berechnen und die verbesserte Energieeffizienz zu überwachen. Dazu stellt die Erfindung eine Messeinrichtung zur Messung der Energieeffizienz einer Vorrichtung bereit, umfassend eine Ummantelung und Dämmung für die Vorrichtung, ein Messgerät und mindestens drei Temperaturfühler, einen Windmesser, und einen Luftfeuchtesensor. Die Energieeffizienz einer Vorrichtung kann mit einem Verfahren bestimmt werden, welches ebenfalls von der Erfindung bereitgestellt wird.

**Hintergrund der Erfindung**

Vor dem Hintergrund des globalen Klimawandels und aus Kostengründen werden gegenwärtig verstärkte Anstrengungen unternommen, um technische Systeme, d.h. Anlagen- bzw. Anlagenteile, im Hinblick auf deren Energieeffizienz zu optimieren. Einen großen Bereich dieser Optimierung betrifft die Dämmung von Rohrleitungen, Pumpen und Armaturen, insbesondere die Nachisolierung unzureichender Dämmung, das Isolieren von ungedämmten Bauteilen und die Reduzierung von Wärmebrücken.

Aktuell werden die Wärmeverluste einer Vorrichtung, wie beispielsweise einer Anlage bzw. eines Behälters oder Rohrleitungssystems, entweder gar nicht oder nur sehr idealisiert berechnet. Dabei wird der zu erwartende Wärmeverlust in der Regel wie folgt ermittelt:

Zum Zeitpunkt der Berechnung werden die vermuteten, bzw. geplanten Betriebsstunden pro Jahr sowie die geplanten oder einmalig gemessenen Betriebstemperaturen von Medium, Objekt und Umgebung verwendet. Dabei werden diese Betriebstemperaturen für die Dauer eines Jahres als konstant angesehen. Dies führt gezwungenermaßen zu ungenauen Ergebnissen. Auf Grund dieser Tatsache werden solche Berechnungen von Kunden angezweifelt und Potenziale für Energieeinsparungen werden nicht genutzt. Die Möglichkeit eines genauen, auf Messwerten basierenden Nachweises fehlt. Umgebungsparameter, wie Windgeschwindigkeit und Luftfeuchte, die mögliche Wärmeverluste stark beeinflussen, werden ebenfalls nicht kontinuierlich erfasst.

Aus dem Stand der Technik sind lediglich ansatzweise Messeinrichtungen und Verfahren zur Bestimmung der Energieeffizienz von Wärme- und Kälteanlagen bekannt. Diese weisen entweder Nachteile auf oder sind für den Zweck der vorliegenden Erfindung nicht geeignet.

Die FR 2907215 offenbart eine Vorrichtung zur Messung des Wärmeflusses einer Wand, umfassend drei Temperatursensoren für die Raumtemperatur, die innere Wandoberfläche und die Außentemperatur. Dieses Dokument offenbart nicht das Vorhandensein eines Windmessers bzw. eines Luftfeuchtemessers. Zudem betrifft dieses Dokument nicht die Wärmeverlustmessung an einer Anlage, einem Behälter oder an Rohrleitungen.

CN 104076062 A offenbart ein Testsystem für Wärmeisolierungen an Rohrleitungen. Allerdings wird ein Testsystem für Wärmeverluste von im Boden verlegten Rohrleitungen vorgestellt, welches mindestens drei Temperatursensoren für die Oberfläche der Rohrleitung, für die Temperaturmessung in verschiedenen radialen Abständen zur Rohroberfläche und für die Messung der Umgebungstemperatur des Bodens aufweist. Die Rohrleitungen weisen keine Wärmeisolierung auf und es soll kein Temperaturgradient zwischen Rohroberfläche und der äußeren Oberfläche einer Wärmeisolierung gemessen werden. Das in CN 104076062 A offenbarte Testsystem umfasst auch keinen Windmesser und Luftfeuchtesensor. Dieses System ist nicht ohne weiteres auf nicht im Boden verlegte Rohrleitungen übertragbar.

CN 106547945 A offenbart ein System und ein Verfahren zur Testung der Energieeffizienz von Energieversorgungsanlagen, insbesondere von kombinierten Kühl-, Wärme- und Energieversorgungsanlagen. Das hier offenbarte System weist zwei Temperatursensoren auf, einen an der Oberfläche des Objekts (Schlauch) und einen an der Oberfläche einer Dämmung. Die Umgebungstemperatur wird nicht gemessen und das System enthält auch keinen Windmesser und keinen Luftfeuchtemesser.

CN 202216927 U betrifft ein Messsystem für Wärmeverluste an Pipelines, wobei mit diesem Messsystem die Wärmeverluste an Rohrleitungen gemessen werden, die keine Dämmung bzw. Isolierung aufweisen. Somit weist dieses Messsystem lediglich Temperatursensoren auf, die an der Oberfläche der nicht isolierten Rohrleitung angebracht werden können. Es fehlen Temperatursensoren für die Messung der Temperatur der Oberfläche einer Wärmeisolierung und der Umgebungstemperatur sowie ein Luftfeuchtesensor. Die in diesem Dokument beschriebene Erfindung fokussiert auf die technische Konstruktion der mechanischen Elemente des Messsystems, wie zum Beispiel das Vorhandensein von Roboterarmen. Insgesamt kann dieses Dokument nicht dazu herangezogen werden, den Wärmeverlust über verschiedene Arten von Wärmeisolierungen an Rohrleitungen bzw. die Effizienz einer Wärmeisolierung zur Verhinderung von Wärmeverlusten gegenüber nicht isolierten Rohrleitungen zu bestimmen.

**Beschreibung der Erfindung**

Die Aufgabe der Erfindung besteht mithin darin, die Nachteile des Standes der Technik zu überwinden und Mittel und Verfahren bereitzustellen, mit denen die Energieeffizienz einer Vorrichtung bestimmt werden kann. Diese Aufgabe wird gelöst durch eine Messeinrichtung gemäß Anspruch 1 und ein Verfahren gemäß Anspruch 15.

In einer Ausführungsform stellt die Erfindung eine Messeinrichtung zur Messung der Wärmeverluste einer Vorrichtung bereit. Die Messeinrichtung umfasst mindestens eine Ummantelung einschließlich einer Dämmung für die Vorrichtung, ein Messgerät, mindestens drei Temperaturfühler, einen Windmesser und einen Luftfeuchtesensor. Die Vorrichtung gemäß der Erfindung ist vorzugsweise ausgewählt aus einer Anlage, einem Behälter, einer Rohrleitung oder einem Rohrleitungssystem, an deren Oberfläche ein Wärmeaustausch mit der Umgebung stattfinden kann. Im Fokus der Erfindung stehen Wärme- und Kälteanlagen und deren Bestandteile.

Unter Ummantelung im Sinne der Erfindung ist eine äußere Hülle um eine Vorrichtung zu verstehen, die in der Regel aus Metall, wie zum Beispiel Stahlblech, Zinkblech, Edelstahlblech oder Aluminiumblech, oder einem Kunststoffmaterial besteht. Als Bestandteil der Messeinrichtung gemäß der Erfindung ist unter Ummantelung in einer bevorzugten Ausführungsform eine teilweise Ummantelung einer Vorrichtung zu verstehen, um die Wirksamkeit und Effizienz einer Dämmung an der Vorrichtung, wie beispielsweise einer Rohrleitung, einem Behälter oder einem Rohrleitungssystem, zu simulieren und mit der ungedämmten und unzureichend gedämmten Vorrichtung zu vergleichen. Zur Temperaturmessung werden mindestens drei Temperaturfühler an verschiedenen Stellen der Messeinrichtung angebracht: auf der Oberfläche der Vorrichtung, auf der Oberfläche der Ummantelung, und beabstandet von der Vorrichtung bzw. Ummantelung (zur Messung der Umgebungstemperatur). Die Ummantelung dient dem Schutz für Dämmstoffe und Dampfbremsen gegen mechanische Beschädigungen und Witterungseinflüsse, insbesondere gegen das Eindringen von Niederschlägen.

In einer bevorzugten Ausführungsform befindet sich unter der Ummantelung bzw. der teilweisen Umwandlung, die Bestandteil der Messeinrichtung der Erfindung ist, eine Dämmung. Bei der Auswahl des Materials für die Dämmung ist der Zweck der Dämmung zu beachten. Es kommen unterschiedliche Dämmstoffe für die Wärmedämmung und für die Kältedämmung zum Einsatz. Unter Wärmedämmung sind Dämmsysteme für Anlagen, die oberhalb der Umgebungstemperatur betrieben werden, zu verstehen. Es erfolgt eine Dämmung gegen Wärmeverlust. Unter Kältedämmung sind Dämmsysteme für Anlagen, die unterhalb der Umgebungstemperatur betrieben werden, zu verstehen. Es erfolgt eine Dämmung gegen Wärmeaufnahme. Geeignete Dämmstoffe für die Wärmedämmung zur Verwendung in der Messeinrichtung gemäß der Erfindung sind beispielsweise ausgewählt aus Mineralwolle Calcium-Magnesium-Silikatfaser, Aluminium-Silikat-Wolle, Calciumsilikat, Erdalkali-Silikat-Wolle, mikroporösen Dämmstoffen, Polyurethan-/Polyisocyanurat-Hartschaum, Polyurethan-Ortschaum, Polystyrol-Partikelschaum, Polystyrol-Extruderschaum, Dämmen mit Schaumglas, Elastomerschaum, Polyethylenschaum, Phenolharzschaum, Melaminharzschaum und Blähperlit. Geeignete Dämmstoffe für die Kältedämmung zur Verwendung in der Messeinrichtung gemäß der Erfindung sind beispielsweise ausgewählt aus Mineralwolle und anderen faserigen oder offenzelligen Dämmstoffen, Polyurethan-/Polyisocyanurat-Hartschaum, Polyurethan-Ortschaum, Polystyrol-Partikelschaum, Polystyrol-Extruderschaum, Schaumglas, Elastomerschaum, Polyethylenschaum, Phenolharzschaum und Blähperlit. Ein mikroporöser Dämmstoff ist ein dicht gepresster oder gesinterter Dämmstoff, dessen Gerüstmaterial aus pulverförmiger Kieselsäure oder aus Silica Gel besteht, und bei dem die Poren in der Größenordnung der mittleren freien Weglänge der Luftmoleküle bei 20 °C und atmosphärischem Druck liegen.

Die Dämmung im Sinne der Erfindung kann mehrlagig oder mehrschichtig sein. Eine mehrlagige Dämmung ist eine Dämmung aus mehreren Lagen des gleichen Dämmstoffes, während eine Mehrschichtdämmung eine Dämmung aus mehreren Schichten unterschiedlicher Dämmstoffe darstellt. In einer Ausführungsform der Erfindung umfasst die Messeinrichtung eine einlagige Dämmung. In einer weiteren Ausführungsform umfasst die erfindungsgemäße Messeinrichtung eine mehrlagige Dämmung, vorzugsweise aus zwei, drei, vier oder fünf Lagen. In einer weiteren Ausführungsform der Erfindung umfasst die Messeinrichtung eine mehrschichtige Dämmung, aus zwei, drei, vier oder fünf Schichten. Die Auswahl, ob die erfindungsgemäße Messeinrichtung eine einlagige Dämmung, eine mehrlagige Dämmung oder eine Mehrschichtdämmung aufweist, die Auswahl der Materialien für die Dämmstoffe und die Bestimmung der Dicke der Dämmschicht richten sich nach der zu erreichenden Energieeffizienz der zu prüfenden Vorrichtung.

Basis für die Ermittlung von Dämmschichtdicken bilden, beispielsweise nach der Richtlinie VDI 2055 Blatt 1, betriebstechnische und wirtschaftliche Forderungen sowie gesetzliche Auflagen und Verordnungen des Umweltschutzes, z.B. die Energieeinsparverordnung (EnEV).

Betriebstechnische Forderungen sind z.B.: die Einhaltung einer vorgegebenen Obergrenze für Wärmestromdichte oder Gesamtwärmeverlust, Einhaltung einer vorgegebenen Oberflächentemperatur zum Schutz vor Verbrennungen und zur Verminderung der Entzündungsgefahr sowie zur Vermeidung von Tauwasser- und Eisbildung, die Begrenzung der Temperaturänderung eines Mediums innerhalb einer vorgegebenen Zeit für ein ruhendes Medium, z.B. Temperaturabfall in einem Behälter, oder innerhalb einer vorgegebenen Strecke für ein strömendes Medium, z.B. Temperaturabfall in einer Leitung. Unter wirtschaftlichen Gesichtspunkten sollen Kapitalaufwand und Wärmeverlustkosten für die zu ermittelnde Dämmschichtdicke ein Minimum ergeben, es ist zwischen Kapitalaufwand für die Erhöhung der Energieeffizienz und den durch Wärmeverlust verursachten Kosten zu optimieren.

Die Dicke der Dämmung, die Bestandteil der erfindungsgemäßen Messeinrichtung ist, liegt im Bereich von 0,9 bis 100 cm, vorzugsweise im Bereich von 1 bis 90 cm, 1 bis 80 cm, 1 bis 70 cm, 1 bis 60 cm, 1 bis 50 cm, 1 bis 40 cm, 1 bis 30 cm oder 1 bis 20 cm, mehr bevorzugt im Bereich von 10 bis 100 mm, 10 bis 90 mm, 10 bis 80 mm oder 10 bis 70 mm, besonders bevorzugt im Bereich von 10 bis 60 mm oder 10 bis 50 mm, wie beispielsweise 40 mm.

Das Material des Dämmstoffs wird üblicherweise nach technischen und wirtschaftlichen Gesichtspunkten ausgewählt. Auswahlkriterien umfassen beispielsweise Eigenschaften des Dämmstoffs, wie Wärmeleitfähigkeit, Anwendungsgrenztemperatur, Wasserdampfdurchlässigkeit, hydrophobe Eigenschaften, Strömungswiderstand, Brandverhalten, mechanische Eigenschaften, Schwingungsverhalten, akustische Eigenschaften, Anteil organischer Bestandteile z.B. bei Luftzerlegungsanlagen, Schimmelfestigkeit in Feuchträumen, Korrosionsverhalten, z.B. geringer Gehalt an wasserlöslichen Chloridionen in Verbindung mit nicht rostenden austenitischen Stählen, Lagerfähigkeit, Transportierbarkeit, Verarbeitbarkeit, Alterungsbeständigkeit, Kosten des eingesetzten Materials und Entsorgung/Recycling.

Der Einfluss der Umgebungsbedingungen, insbesondere bei freistehenden, nicht eingehausten Anlagen, auf Wärme- bzw. Kälteverluste ist sehr hoch. Unter Umgebungsbedingungen werden im Sinne der Erfindung atmosphärische, meteorologische und sonstige Bedingungen, unter denen eine technische Anlage betrieben wird, verstanden. Eine besondere Rolle spielen die Umgebungstemperatur, die Luftfeuchte und die Windgeschwindigkeit. Eine niedrige Umgebungstemperatur und hohe Windgeschwindigkeiten befördern beispielsweise die Wärmeabgabe von ungedämmten Vorrichtungen und Anlagen. Hohe Umgebungstemperaturen und niedrigeren Geschwindigkeiten befördern im umgekehrten Falle die Wärmeaufnahme ungedämmter Vorrichtungen und Anlagen. Die Luftfeuchtigkeit beeinflusst die Wärmeaufnahmekapazität der Luft, die ungedämmte Vorrichtungen und Anlagen umgibt. Zudem herrschen über den Verlauf eines Tages bzw. über den Verlauf eines Jahres niemals identische Temperaturen und Windgeschwindigkeiten an ein und demselben Ort. Es treten aufgrund des Wechsels von Tag und Nacht bzw. aufgrund jahreszeitlicher und wetterabhängiger Schwankungen ständige Änderungen der Werte für Temperaturen und Windgeschwindigkeiten auf. Ebenso unterliegt die Luftfeuchtigkeit Schwankungen. Die Schwankungen dieser Umgebungsparameter wurden bei bisherigen Berechnungsmethoden für die Energieeffizienz von Vorrichtungen und Anlagen nicht berücksichtigt. Es wurden jeweils konstante Werte angenommen. Der besondere Vorteil der Messeinrichtung der vorliegenden Erfindung liegt nun darin, dass die erfindungsgemäße Messeinrichtung Bestandteile umfasst, mit denen die Schwankungen in Temperatur, Windgeschwindigkeit und Luftfeuchte kontinuierlich in vorgegebenen Intervallen über große Zeiträume erfasst und gemessen werden können.

In einer bevorzugten Ausführungsform umfasst die Messeinrichtung gemäß der Erfindung mindestens drei Temperaturfühler. Ein Temperaturfühler wird direkt an der äußeren Oberfläche der Vorrichtung angebracht. Bei einem Behälter bildet die äußere Oberfläche beispielsweise die äußere Behälterwand. Bei einer Rohrleitung ist die äußere Oberfläche die Außenseite des Rohres. Die erfindungsgemäße Messeinrichtung ist weiterhin so ausgestaltet, dass die Vorrichtung, deren Wärmeverlust bzw. Wärmeaufnahme gemessen und deren Energieeffizienz bestimmt werden soll, zumindest teilweise mit einer, wie zuvor beschriebenen, Ummantelung einschließlich einer teilweisen bzw. bereichsweisen Dämmung ausgerüstet wird. Diese teilweise oder bereichsweise Dämmung ist Bestandteil der erfindungsgemäßen Messeinrichtung. Die Messeinrichtung wird üblicherweise an ungedämmten Wärme- oder Kälteanlagen verwendet. Es ist auch denkbar, dass die erfindungsgemäße Messeinrichtung an Wärme- oder Kälteanlagen, die zwar eine Dämmung aufweisen, wobei die Dämmung aber unzureichend ist. In diesem Falle würde der erste Temperaturfühler auf der Oberfläche der unzureichenden Dämmung angebracht werden. Die Oberfläche der unzureichenden Dämmung würde dann mit einer Ummantelung einschließlich einer teilweisen bzw. bereichsweisen Dämmung als Bestandteil der erfindungsgemäßen Messeinrichtung angebracht werden. Auf der Oberfläche dieser zumindest teilweisen Ummantelung wird der zweite Temperaturfühler angebracht. Damit ist es möglich, die Temperaturunterschiede, die direkt an der Oberfläche der Vorrichtung und die an der Oberfläche der Ummantelung herrschen, zu messen und in die Berechnung des Wärmeverlustes bzw. der Wärmeaufnahme, und damit der Energieeffizienz der zu prüfenden Vorrichtung, einzubeziehen. Ein dritter Temperaturfühler ist dafür vorgesehen, unabhängig von der Vorrichtung und von der Ummantelung die Umgebungstemperatur zu messen. Der erste Temperaturfühler ist in einer Ausführungsform der Erfindung auf der Oberfläche der ungedämmten Vorrichtung in einem Bereich außerhalb der zumindest teilweisen Ummantelung angebracht. Es kann jedoch zweckmäßig sein, die Temperatur an der Oberfläche der Vorrichtung direkt unterhalb der zumindest teilweisen Ummantelung zu messen. So ist der erste Temperaturfühler in einer alternativen Ausführungsform der Erfindung an der Oberfläche der Vorrichtung direkt unterhalb der zumindest teilweisen Ummantelung angebracht. Des Weiteren kann es vorkommen, dass es durch die zumindest teilweise Ummantelung zu einem Wärmestau und damit zu einer Erhöhung der Objekttemperatur kommt, was zu einer Verfälschung der Messergebnisse führen kann. Optional kann die erfindungsgemäße Messeinrichtung deshalb weitere Temperaturfühler aufweisen. In einer bevorzugten Ausführungsform weist die erfindungsgemäße Vorrichtung deshalb optional einen vierten Temperaturfühler auf, wobei der erste Temperaturfühler an der Oberfläche der Vorrichtung direkt unterhalb der zumindest teilweisen Ummantelung angebracht ist, der zweite Temperaturfühler auf der Oberfläche der zumindest teilweisen Ummantelung angebracht ist, ein dritter Temperaturfühler dafür vorgesehen ist, unabhängig von der Vorrichtung und von der Ummantelung die Umgebungstemperatur zu messen, und optional ein vierter Temperaturfühler auf der Oberfläche der Vorrichtung in einem ungedämmten Bereich angebracht ist.

Zur kontinuierlichen Messung sich ändernder Windverhältnisse umfasst die erfindungsgemäße Messeinrichtung weiterhin einen Windmesser. Zur kontinuierlichen Messung der Luftfeuchte umfasst die erfindungsgemäße Vorrichtung außerdem einen Luftfeuchtesensor.

Als Temperaturfühler zur Verwendung in der erfindungsgemäßen Messeinrichtung kommen alle konventionellen Temperaturfühler in Frage. Geeignet sind beispielsweise PT100 Temperatursensoren verschiedener Hersteller, wobei je nach Messort und je nach Typ der Anlage PT100 Temperatursensoren mit unterschiedlichen Messbereichen eingesetzt werden. So ist der Temperatursensor an der Oberfläche der Vorrichtung beispielsweise ein PT100 Temperatursensor mit einem Messbereich von -200 bis +1000 °C. Dies trifft insbesondere für wärmeführende Anlagen zu. Wenn es sich bei der Vorrichtung um eine Kälteanlage handelt, so kann der Temperatursensor beispielsweise ein PT100 Temperatursensor mit einem Messbereich von -200 bis 50°C sein. Der Temperatursensor an der Oberfläche der Ummantelung ist beispielsweise ein PT100 Temperatursensor mit einem Messbereich von -30 bis +150 °C. Der Temperatursensor für die Umgebungstemperatur kann beispielsweise ein PT100 Temperatursensor mit einem Messbereich von -30 bis +100 °C, vorzugsweise mit einem Messbereich von -30 bis +75 °C, besonders bevorzugt mit einem Messbereich von -30 bis +50 °C sein.

Im Sinne der Erfindung werden die Begriffe "Temperatursensor" und "Temperaturfühler" synonym verwendet.

Als Windmesser zur Verwendung in der erfindungsgemäßen Messeinrichtung kommen alle konventionellen Anemometer in Frage. Geeignet ist beispielsweise ein Anemometer, mit dem Windgeschwindigkeiten im Bereich von 0 - 40 m/s, vorzugsweise im Bereich von 0 - 30 m/s gemessen werden können.

Als Luftfeuchtemesser zur Verwendung in der erfindungsgemäßen Messeinrichtung kommen alle konventionellen Feuchtesensoren in Frage. Geeignet ist beispielsweise ein Feuchtesensor mit einem Messbereich von 0 bis 100 % Luftfeuchte.

Die Temperaturfühler, Windmesser und Luftfeuchtemesser werden in der Regel als Einzelmodule in der erfindungsgemäßen Messeinrichtung verwendet. Ebenso geeignet für die Verwendung in der erfindungsgemäßen Messeinrichtung für die Messung der Umgebungstemperatur und die Messung der Luftfeuchte sind aber auch kombinierte Feuchte- und Temperatursensoren, wobei die Feuchte- und Temperatursensoren in den Kombinationsmodulen die oben genannten Messbereiche aufweisen.

In einer weiteren Ausführungsform weist die erfindungsgemäße Messeinrichtung in dem Messgerät weiterhin einen Mikrocontroller, ein Speichermedium, eine Echtzeituhr, und optional ein Display auf. Die erfindungsgemäße Messeinrichtung berechnet in einer frei wählbaren Taktung den aktuellen Wärmeverlust mit montierter Dämmung und ohne Dämmung, und daraus die tatsächliche, bzw. potenzielle Energie- und Kosteneinsparungen, sowie eine Hochrechnung dieser Werte für einen vorgegebenen Zeitraum, wie beispielsweise ein Jahr. Diese Werte (gemessene und berechnete) werden pro Berechnungszyklus auf dem Speichermedium festgehalten und können später per elektronischer Datenverarbeitung (EDV) (z.B. Tabellenkalkulation) in Diagrammen oder anderer Form dargestellt werden. Der Mikrocontroller wird mit allen für den Messort nötigen individuellen Werten programmiert. Diese sind Energiekosten, Fläche oder Länge und Durchmesser der zu untersuchenden Vorrichtung, wie beispielsweise eines Rohrleitungssystems, Behälter etc., spezifische Werte des Dämmsystems (Kennzahlen des Dämmstoffs oder der Dämmstoffe bei Mehrlagigkeit, Dämmdicke, Wärmeleitfähigkeit, nötige Werte der Ummantelung). Danach wird das Messgerät an einer für die Erfassung geeigneten Stelle montiert und die Temperaturfühler an der Oberfläche der Vorrichtung, der Ummantelung, und für die Umgebungstemperatur installiert. Nach Inbetriebnahme des Messgerätes werden die Temperaturen vom Objekt, auf der Dämmung und von der Umgebung gemessen und vom Mikrocontroller ausgelesen. Danach beginnt die erste Berechnungsschleife, welche sich in einem frei wählbaren Intervall (z.B. aller 60 Sekunden oder 5 Minuten) wiederholt. Somit erfolgt nicht wie bisher eine Messung/Berechnung pro Jahr sondern mehrere Tausend Berechnungen in einem vergleichbaren Zeitraum. Dies führt in vorteilhafter Weise zu genaueren, plausibleren und fundierteren Ergebnissen mit einem höheren Grad an Glaubwürdigkeit. Die Berechnungen selbst erfolgen beispielsweise nach der Richtlinie VDI 2055. Durch ein optional eingebautes Display werden abwechselnd die gemessenen Werte sowie die berechneten Ergebnisse angezeigt. Damit sind die erreichte Energieeinsparung seit Messungsbeginn und eine Hochrechnung auf einen vorgegebenen Zeitraum, wie beispielsweise ein Jahr, leicht verständlich und nachvollziehbare ablesbar. Für eine genauere, bzw. umfangreichere Auswertung können die Daten von der Speicherkarte ausgelesen und an eine Datenverarbeitungsanlage weitergeleitet bzw. von dieser weiterverarbeitet werden. Die erfindungsgemäße Messeinrichtung ermöglicht die Aufstellung eines innovativen und erfolgsabhängigen Finanzierungsmodells für Wärme- und Kältedämmungen.

Als Mikrocontroller im Sinne der Erfindung wird ein Halbleiterchip verstanden, der einen Prozessor und zugleich auch Peripheriefunktionen enthält. In einer bevorzugten Ausführungsform befindet sich auch der Arbeits- und Programmspeicher teilweise oder komplett auf demselben Chip.

Eine Echtzeituhr (englisch real-time clock, RTC) oder physikalische Uhr ist eine Uhr, welche die physikalische Zeit misst. Im Gegensatz dazu misst eine logische Uhr eine relative Zeit, die nicht der aktuellen Uhrzeit entspricht. In der vorliegenden Erfindung ist die Echtzeituhr Teil der erfindungsgemäßen Messeinrichtung und hält die Uhrzeit vor. Es werden vorzugsweise Vorkehrungen getroffen, damit die Uhrzeit nach erneutem Einschalten wieder zur Verfügung steht. Insbesondere ist eine Echtzeituhr ein Schaltkreis, welcher die Uhrzeit (mittels eines eigenen Energiespeichers, etwa einer Batterie) auch bei ausgeschalteter Messeinrichtung fortschreiben kann.

Das Speichermedium im Sinne der Erfindung ist ein Datenträger oder ein Medium, das als Datenspeicher dient. Es handelt sich insbesondere um einen Datenspeicher für elektronische Geräte, wie beispielsweise elektronische Bauteile (Halbleiterspeicher), die oft in elektronische Geräte eingebaut werden und Daten speichern, aber auch um Datenträger bzw. Speichermedien, die nur mit elektronischen Geräten gelesen oder beschrieben werden können, aber keine Halbleiterspeicher sind. Beispiel für geeignete Speichermedien sind Speicherchips, Festplatten, auch in Form von Microdrives, USB-Sticks, CDs und Blue Ray Discs.

Als Datenverarbeitungsanlage eignet sich erfindungsgemäß jeder herkömmliche Computer, wie zum Beispiel ein Desktop-PC, ein Laptop-PC oder ein Tablet-PC. Ebenso geeignet als Datenverarbeitungsanlage ist ein mobiles Telefon, wie zum Beispiel ein Smart-Phone.

In einer weiteren Ausführungsform weist die erfindungsgemäße Messeinrichtung weiterhin ein Modul für eine Datenverbindung auf, um die Messdaten auf eine Datenverarbeitungsanlage, beispielsweise in einer Messwarte, zu übertragen. Das Modul zur Datenübertragung kann beispielsweise eine serielle oder parallele Schnittstelle, USB-Adapter, Mini-USB-Adapter, WLAN-Modul, WIFI-Modul, Bluetooth-Modul oder eine SIM-Karte sein, das mit der Datenverarbeitungsanlage zusammenwirkt. Bevorzugt gemäß der Erfindung sind solche Module zur Datenübertragung, die eine drahtlose Übertragung der Messdaten von der erfindungsgemäßen Messeinrichtung zu der Datenverarbeitungsanlage ermöglichen. Entsprechend ist es bevorzugt, wenn die Datenverbindung zwischen der erfindungsgemäßen Messeinrichtung und der Datenverarbeitungsanlage eine Drahtlosverbindung, wie beispielsweise ausgewählt aus einer Bluetooth-Verbindung, Mobilfunkverbindung oder WLAN-Verbindung ist. Alternativ kann die Datenverbindung auch eine kabelgebundene Verbindung, wie beispielsweise eine LAN- Verbindung sein. Damit ist es auch möglich und insbesondere bevorzugt, die Messdaten und die von dem Mikrocontroller des Messgeräts in einer Cloud zu speichern.

Die Erfindung betrifft weiterhin eine Vorrichtung, also eine Anlage, einen Behälter, eine Rohrleitung oder ein Rohrleitungssystem, das mit der erfindungsgemäßen Messeinrichtung ausgestattet ist.

Ein weiterer Aspekt der Erfindung betrifft ein Verfahren zur Bestimmung des Wärmeverlustes oder der Wärmeaufnahme einer Vorrichtung mit Hilfe der erfindungsgemäßen Messeinrichtung. Die vorstehend hinsichtlich der Messeinrichtung beschriebenen Vorteile und vorteilhaften Ausgestaltungen gelten auch für das erfindungsgemäße Verfahren, so dass auf das Vorstehende verwiesen wird.

In einer Ausführungsform umfasst das erfindungsgemäße Verfahren die Schritte:

- Programmierung des Mikrokontrollers des Messgeräts,
- Montieren der Messeinrichtung nach einem der vorherigen Ansprüche an der Vorrichtung,
- Installieren des Temperaturfühlers der Messeinrichtung an der Vorrichtung;
- Anbringen eine Ummantelung und einer Dämmung an der Vorrichtung;
- Installieren des Temperaturfühlers an der Ummantelung und des Temperaturfühlers für die Messung der Umgebungstemperatur an der Vorrichtung,
- Messen der Temperaturen an der Oberfläche der Vorrichtung, auf der Ummantelung und der Umgebung und Auslesen der Messwerte mit dem Mikrokontroller des Messgeräts,
- Berechnung der Energieeinsparung in einem vorgegebenen Intervall,
- Optional Anzeigen der gemessenen Werte sowie der berechneten Ergebnisse mit einem Display.

Das Anbringen der Ummantelung schließt in einer bevorzugten Ausführungsform des erfindungsgemäßen Verfahrens das Anbringen einer Dämmung unterhalb bzw. innerhalb der Ummantelung ein.

Die Berechnung der Energieeinsparung erfolgt beispielsweise nach der Richtlinie VDI 2055 Blatt 1, Ausgabe September 2008.

In einer bevorzugten Ausführungsform ist das erfindungsgemäße Verfahren dadurch gekennzeichnet, dass der Mikrokontroller mit allen für den Messort nötigen individuellen Werten, wie Energiekosten, Fläche oder Länge und Durchmesser des zu messenden Rohrleitungssystems, Abmessungen des Behälters, spezifischen Werten des Dämmsystems, wie Kennzahlen des Dämmstoffs oder der Dämmstoffe bei Mehrlagigkeit, Dämmdicke, Wärmeleitfähigkeit und nötige Werte der Ummantelung, programmiert wird. Die Kennzahlen des Dämmstoffs, insbesondere die Anzahl der Lagen oder Schichten und die Dicke des Dämmstoffs werden beispielsweise anhand der Richtlinie VDI 2055 Blatt 1, Ausgabe September 2008 ermittelt.

In einer weiteren Ausführungsform umfasst das erfindungsgemäße Verfahren weiterhin das Installieren eines Luftfeuchtesensors an der Vorrichtung.

In einer weiteren Ausführungsform umfasst das erfindungsgemäße Verfahren weiterhin das Installieren eines Windmessers an der Vorrichtung.

In einer besonders bevorzugten Ausführungsform umfasst das erfindungsgemäße Verfahren weiterhin das Messen der Luftfeuchte mit dem Luftfeuchtesensor und/oder der Windgeschwindigkeit mit dem Windmesser an der Vorrichtung und das Auslesen der Messwerte mit dem Mikrocontroller.

In einer weiteren bevorzugten Ausführungsform des erfindungsgemäßen Verfahrens werden die Messdaten der Temperatursensoren und/oder die Messdaten des Luftfeuchtesensors und/oder des Windmessers und/oder die von dem Mikrocontroller weiterverarbeiteten Daten in einer Cloud gespeichert. Dies hat den Vorteil, dass Nutzer auf die Daten mit jeder Art von Datenverarbeitungsanlage jederzeit, auch mehrere Nutzer gleichzeitig, zugreifen können.

In einer bevorzugten Ausführungsform der Erfindung wird die erfindungsgemäße Messeinrichtung als Effizienzmesser bzw. zur Ermittlung eines erfolgsabhängigen Finanzierungsmodels eingesetzt.

Die Berechnung der Energieeinsparung in einem vorgegebenen Intervall umfasst die Berechnung des Gesamtwärmeverlusts der zu betrachtenden Vorrichtung. Dazu können beispielsweise die Länge einer Rohrleitung und die Anzahl der Betriebsstunden zugrunde gelegt werden, um die jährliche Energieverluste einer gedämmten Rohrleitung zu vermessen.

In einer weiteren Ausführungsform des erfindungsgemäßen Verfahrens wird in einer Software der erfindungsgemäßen Messeinrichtung wird aus den erfolgten Messungen und Berechnungen permanent, d.h. in Echtzeit, ein neuer Durchschnitt gebildet und damit eine aktuelle Hochrechnung auf den jährlichen (oder in einem anderen vorgegebenen Zeitintervall) Energieverlust bereitgestellt. Mit dieser Vorgehensweise kann schon nach kurzer Zeit mit einer guten Genauigkeit eine Hochrechnung für beispielsweise auf ein Jahr bereitgestellt werden.

In einer weiteren Ausführungsform des erfindungsgemäßen Verfahrens wird parallel der Wärmeverlust ohne Dämmung, d.h. einer ungedämmten Vorrichtung, bestimmt, um die möglichen Einsparungen berechnen zu können. Auch hier wird mit jeder neuen Berechnung ein neuer Durchschnittswert berechnet, um eine Hochrechnung für ein vorgegebenes Intervall, beispielsweise ein ganzes Jahr, bereitzustellen.

Das vorgegebene Zeitintervall für die Erstellung einer Hochrechnung im Sinne der Erfindung ist beispielsweise ein Jahr oder ein Monat oder ein anderer Zeitraum.

Aus der Differenz der beiden Verluste (der gedämmten Vorrichtung und der ungedämmten Vorrichtung) kann nun die Einsparung an Energie, multipliziert mit dem Preis für 1 kWh der monetäre Effekt und multipliziert mit dem brennstoffabhängigen $CO_2$-Verbrauch, dessen Einsparung berechnet werden.

Da die Betriebszustände und Umgebungsbedingungen und sämtliche weitere Einflüsse (Betriebsstillstände, Produktionszyklen, Witterungseinflüsse, Tag-Nachtwechsel) permanent erfasst werden und in die Berechnung einfließen, ergibt sich ein sehr aussagekräftiges und genaues Ergebnis.

Für das erfolgsorientierte Finanzierungsmodel kann beispielsweise ein Jahr oder ein Monat oder ein anderer Zeitraum als Abrechnungsintervall gewählt werden.

Der der Erfindung zugrundeliegende Gedanke soll im Folgenden anhand der in den Figuren dargestellten Ausführungsformen und anhand eines Ausführungsbeispiels näher erläutert werden. Es zeigen:

**Figur 1**    den Gesamtaufbau der erfindungsgemäßen Vorrichtung, angebracht an einer Rohrleitung;

**Figur 2**    die erfindungsgemäße Vorrichtung, umfassend mindestens drei Temperaturfühler, angebracht an einer Rohrleitung;

**Figur 3**    die erfindungsgemäße Vorrichtung, umfassend mindestens drei Temperaturfühler und einen Luftfeuchtesensor, angebracht an einer Rohrleitung;

**Figur 4**    die erfindungsgemäße Vorrichtung, umfassend mindestens drei Temperaturfühler und einen Windmesser, angebracht an einer Rohrleitung;

**Figur 5**    die erfindungsgemäße Messeinrichtung, angebracht auf einer ebenen Fläche;

**Figur 6**    die erfindungsgemäße Messeinrichtung, umfassend drei Temperatursensoren, angebracht an einer Behälterwand;

**Figur 7**    die erfindungsgemäße Messeinrichtung, umfassend drei Temperatursensoren und einen Luftfeuchtesensor, angebracht an einer Behälterwand; und

**Figur 8**    die erfindungsgemäße Messeinrichtung, umfassend drei Temperatursensoren, einen Luftfeuchtesensor und einen Windmesser, angebracht an einer Behälterwand.

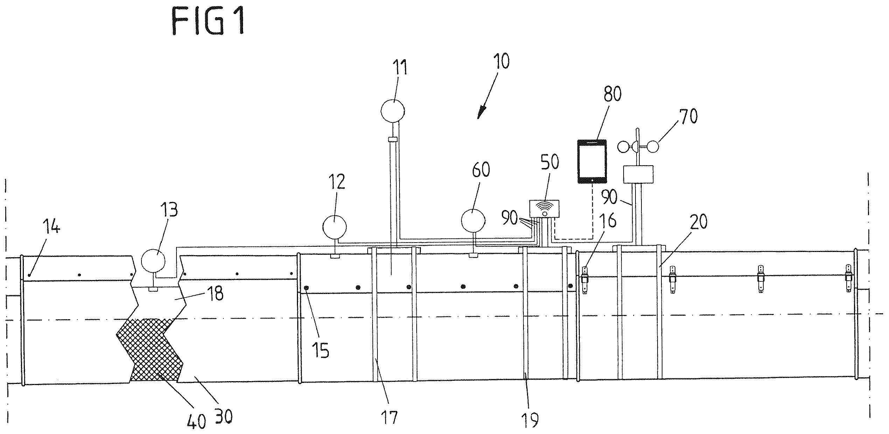

Einer der hauptsächlichsten Anwendungsgebiete der Messeinrichtung der Erfindung besteht in der Messung der Wärmeverluste bzw. der Wärmeaufnahme an Rohrleitungen. Einen solchen Aufbau der erfindungsgemäßen Messeinrichtung 10 zeigt Figur 1. auf der Oberfläche der Rohrleitung 18 wird ein Temperatursensor 13 angebracht. Der Temperatursensor 13 ist ein PT100 Sensor, der einen Messbereich von -200 bis +1000 °C aufweist. Die Rohrleitung 18 erhält dann eine Dämmung 40 und eine Ummantelung 30, beispielsweise nach den Vorschriften der DIN 4140. Im vorliegenden Fall handelt es sich bei der Ummantelung 30 um eine Blechummantelung aus Stahlblech. Es gibt verschiedene Möglichkeiten, eine Befestigung der Ummantelung 30 zu erreichen. In Figur 1 sind drei Befestigungsmöglichkeiten gezeigt, nämlich mittels Blindnieten 14, mittels Blechtreibschrauben 15 oder mittels Kniehebelverschlüssen 16. Je nach Verwendungszweck und Einsatzort wird der Fachmann die entsprechende Befestigungsmöglichkeit zur Befestigung der Ummantelung auswählen. Auf der Oberfläche der Ummantelung 30 ist ein weiterer Temperatursensor 12 befestigt. Der Temperatursensor 12 ist ein PT100 Sensor, der einen Messbereich von -30 bis +150 °C aufweist. Auf der Ummantelung 30 ist mittels einer Befestigungseinrichtung 17 ein weiterer Temperatursensor 11 befestigt, der die Temperatur der Umgebung misst. Der Temperatursensor 11 ist so angebracht, dass er von der Ummantelung 30 beabstandet ist. Der Temperatursensor 11 ist ein PT100 Sensor, der einen Messbereich von -30 bis +50 °C aufweist. Die Befestigungseinrichtung 17 umfasst Leichtprofile und Spannbänder auf der Ummantelung 30. Die Messeinrichtung 10 umfasst weiterhin einen Luftfeuchtemesser 60. Bei dem Luftfeuchtemesser 60 handelt es sich um einen Feuchtesensor mit einem Messbereich von 0 bis 100 % Luftfeuchte. Die Messeinrichtung 10 in der hier gezeigten Ausführungsform umfasst außerdem einen Windmesser 70. Bei dem Windmesser 70 handelt es sich um ein Anemometer, mit dem Windgeschwindigkeiten im Bereich von 0 bis 30 m/s gemessen werden können. Der Windmesser 70 ist mit einer Befestigungseinrichtung 20, die Leichtprofile und Spannbänder aufweist, auf der Ummantelung 30 befestigt. Die Messsignale werden von den Temperatursensoren 11, 12 und 13, sowie von dem Feuchtesensor 60 und dem Windmesser 70 mittels Datenkabeln 90 zu dem Messgerät 50 übertragen. Das Messgerät 50 weist einen Mikrocontroller auf, ein Speichermedium und eine Echtzeituhr. Optional kann das Messgerät 50 ein Display 80 aufweisen. Das Messgerät 50 verfügt in der hier gezeigten Ausführungsform über ein Drahtlos-Modul, wie beispielsweise ein WLAN-Modul, WIFI-Modul oder ein Mobilfunkmodul, über das das Messgerät 50 mit einer Datenverarbeitungsanlage (nicht gezeigt) zusammenwirkt. Das Messgerät 50 ist über eine Befestigungseinrichtung 19, die Leichtprofile und Spannbänder aufweist, auf der Ummantelung 30 befestigt.

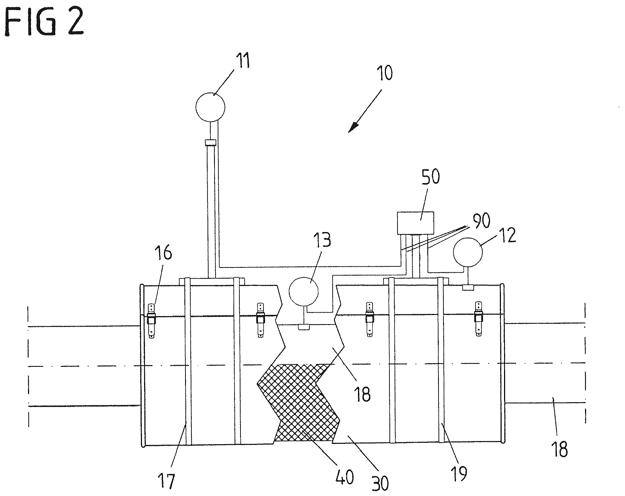

Figur 2 zeigt den Mindestaufbau der erfindungsgemäßen Messeinrichtung 10. Eine Rohrleitung 18 einer Wärmeversorgungsanlage wird auf einem Teilstück mit einer Dämmung 40 und einer Ummantelung 30, beispielsweise gemäß DIN 4140, ausgestattet. Unterhalb der Dämmung 40 auf der Oberfläche der Rohrleitung 18 ist ein Temperatursensor 13 für die Messung der Temperatur an der Oberfläche der Rohrleitung 18 angebracht. Dabei handelt es sich um einen Temperatursensor des Typs PT100 mit einem Messbereich von -200 bis +1000 °C. Die Ummantelung ist mit Kniehebelverschlüssen 16 befestigt. Auf der Ummantelung 30 ist ein zweiter Temperatursensor 12 für die Messung der Temperatur an der Oberfläche der Ummantelung 30 angebracht. Dabei handelt es sich um einen Temperatursensor des Typs PT100 mit einem Messbereich von -30 bis +150 °C. Mit einer Befestigung 17, die Leichtprofile und Spannbänder umfasst, ist ein dritter Temperatursensor 11 für die Messung der Umgebungstemperatur auf der Ummantelung 30 so befestigt, dass der Temperatursensor 11 von der Ummantelung 30 bzw. der Rohrleitung 18 beabstandet ist. Dabei handelt es sich um einen Temperatursensor des Typs PT100 mit einem Messbereich von -30 bis +50 °C. Die hier gezeigte Ausführungsform der Messeinrichtung 10 umfasst weiterhin ein Messgerät 50, dass mittels einer Befestigung 19, die aus Leichtprofilen und Spannbändern besteht, auf der Ummantelung 30 befestigt ist. Das Messgerät 50 ist über Datenleitungen 90 mit den Temperatursensoren 11, 12 und 13 verbunden. Das Messgerät 50 weist einen Mikrocontroller auf, ein Speichermedium und eine Echtzeituhr. Optional kann das Messgerät 50 ein Display 80 aufweisen. Das Messgerät 50 verfügt in der hier gezeigten Ausführungsform über ein Drahtlos-Modul, wie beispielsweise ein WLAN-Modul, WIFI-Modul oder ein Mobilfunkmodul, über das das Messgerät 50 mit einer Datenverarbeitungsanlage (nicht gezeigt) zusammenwirkt.

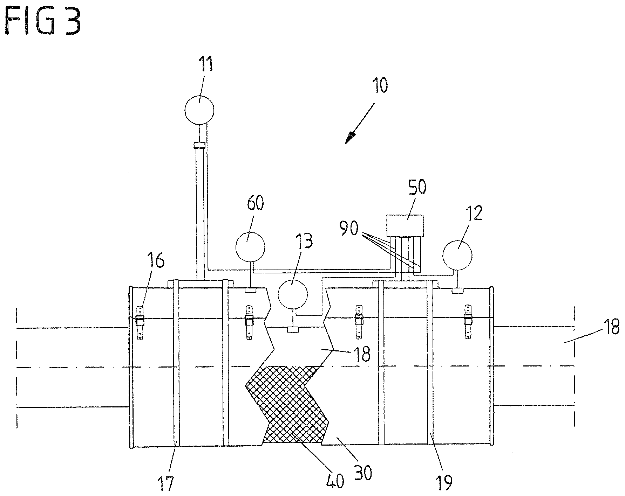

Figur 3 zeigt den Aufbau der Messeinrichtung 10 wie in Figur 3, jedoch zusätzlich aufweisend einen Luftfeuchtesensor 60. Bei dem Luftfeuchtemesser 60 handelt es sich um einen Feuchtesensor mit einem Messbereich von 0 bis 100 % Luftfeuchte. Die Messsignale werden von den Temperatursensoren 11, 12 und 13 sowie von dem Feuchtesensor 60 mittels Datenkabeln 90 zu dem Messgerät 50 übertragen und dort gespeichert und mit dem Mikrocontroller weiterverarbeitet.

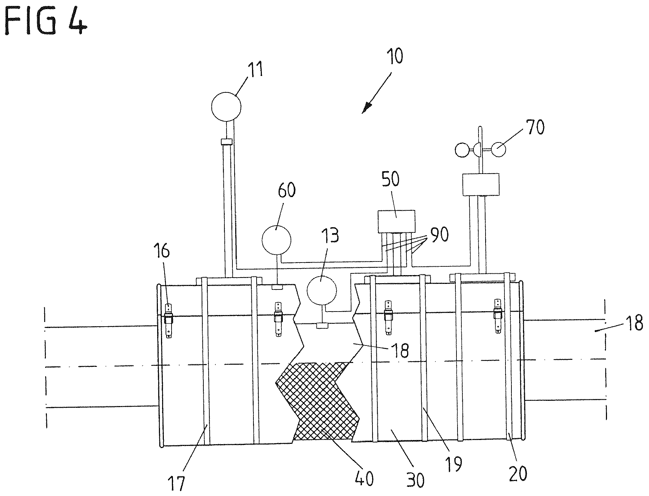

Figur 4 zeigt den Aufbau der Messeinrichtung 10 wie in Figur 2, jedoch zusätzlich enthaltend einen Windmesser 70. Bei dem Windmesser 70 handelt es sich um ein Anemometer mit einem Messbereich von 0 bis 30 m/s Windgeschwindigkeit. Die Messsignale werden von den Temperatursensoren 11, 12 und 13 sowie von dem Windmesser 70 mittels Datenkabeln 90 zu dem Messgerät 50 übertragen und dort gespeichert und weiterverarbeitet.

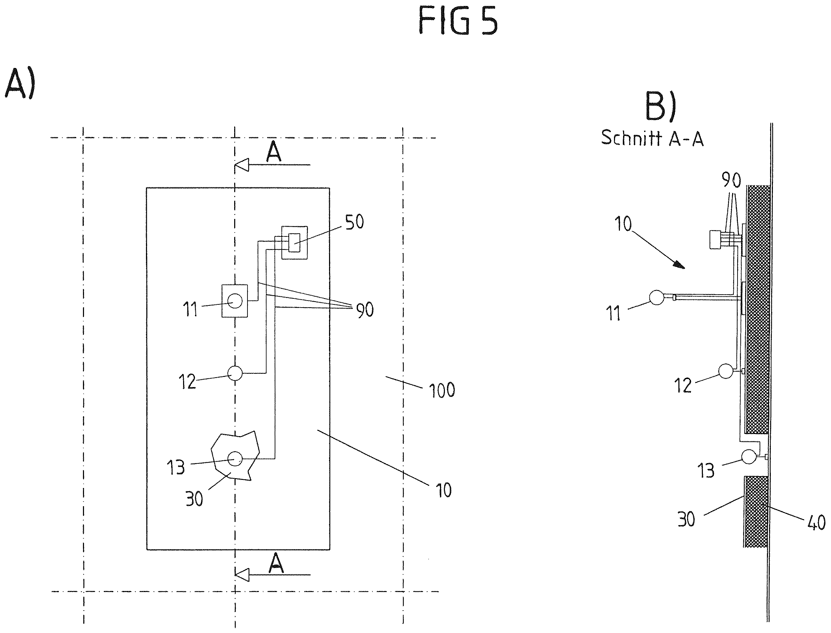

Figur 5 zeigt den Aufbau der erfindungsgemäßen Messeinrichtung 10 auf einer ebenen Fläche 100, wie beispielsweise der Wand eines Containers, in Draufsicht (Fig. 5A) und im Querschnitt (Fig. 5B). Ein erster Temperatursensor 13 ist direkt auf der Oberfläche der ebenen Fläche 100 angebracht. Dabei handelt es sich um einen Temperatursensor des Typs PT100 mit einem Messbereich von -200 bis +1000 °C. Die ebene Fläche 100 ist teilweise mit einer Dämmung 40 und einer Ummantelung 30, beispielsweise nach DIN 4140, versehen. An einer Stelle befindet sich auf der Dämmung 40 und Ummantelung 30 ein zweiter Temperatursensor 12 für die Messung der Temperatur an der Oberfläche der Dämmung/Ummantelung 30, 40. Dabei handelt es sich um einen PT100 Temperatursensor mit einem Messbereich von -30 bis +150 °C. Beanstandet von der ebenen Fläche 100 und der Dämmung 30 ist ein dritter Temperatursensor 11 für die Messung der Umgebungstemperatur angebracht. Dabei handelt es sich um einen Temperatursensor des Typs PT100 mit einem Messbereich von -30 bis +50 °C. Die Befestigung des Temperatursensors 11 auf der Dämmung 40 bzw. Ummantelung 30 erfolgt beispielsweise über Leichtprofile. Die Messeinrichtung 10 der hier gezeigten Ausführungsform umfasst weiterhin ein Messgerät 50. Das Messgerät 50 ist über Datenleitungen 90 mit den Temperatursensoren 11, 12 und 13 verbunden. Das Messgerät 50 weist einen Mikrocontroller auf, ein Speichermedium und eine Echtzeituhr. Optional kann das Messgerät 50 ein Display 80 (siehe Fig. 1) aufweisen. Das Messgerät 50 verfügt optional über ein Drahtlos-Modul, wie beispielsweise ein WLAN-Modul, WIFI-Modul oder ein Mobilfunkmodul, über das das Messgerät 50 mit einer Datenverarbeitungsanlage (nicht gezeigt) zusammenwirkt. Es kann aber auch kabelgebunden mit einer Datenverarbeitungsanlage verbunden sein. In weiteren Ausführungsformen kann die erfindungsgemäße Messeinrichtung 10 gemäß Figur 5 weiterhin einen Luftfeuchtesensor 60 (nicht gezeigt, siehe Fig. 1) und/oder einen Windmesser 70 (nicht gezeigt, siehe Fig. 1) aufweisen.

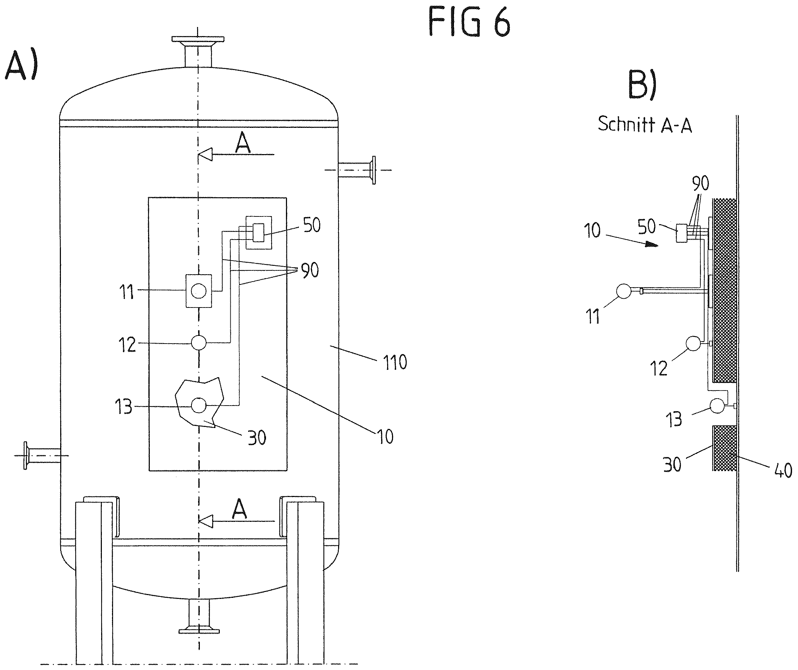

Figur 6 zeigt den Aufbau der erfindungsgemäßen Messeinrichtung 10 auf einer Wand eines Behälters 110, wie beispielsweise eines Behälters für Warmwasserspeicherung in Draufsicht (Fig. 6A) und im Querschnitt (Fig. 6B). Ein erster Temperatursensor 13 ist direkt auf der Oberfläche des Behälters 110 angebracht. Dabei handelt es sich um einen Temperatursensor des Typs PT100 mit einem Messbereich von -200 bis +1000 °C. Die Oberfläche des Behälters 110 ist teilweise mit einer Dämmung 40 und einer Ummantelung 30, beispielsweise nach DIN 4140, versehen. An einer Stelle befindet sich auf der Dämmung 40 und Ummantelung 30 ein zweiter Temperatursensor 12 für die Messung der Temperatur an der Oberfläche der Dämmung/Ummantelung 30, 40. Dabei handelt es sich um einen PT100 Temperatursensor mit einem Messbereich von -30 bis +150 °C. Beanstandet von der ebenen Fläche 100 und der Dämmung 30 ist ein dritter Temperatursensor 11 für die Messung der Umgebungstemperatur angebracht. Dabei handelt es sich um einen Temperatursensor des Typs PT100 mit einem Messbereich von -30 bis +50 °C. Die Befestigung des Temperatursensors 11 auf der Dämmung 40 bzw. Ummantelung 30 erfolgt beispielsweise über Leichtprofile. Die Messeinrichtung 10 der hier gezeigten Ausführungsform umfasst weiterhin ein Messgerät 50. Das Messgerät 50 ist über Datenleitungen 90 mit den Temperatursensoren 11, 12 und 13 verbunden. Das Messgerät 50 weist einen Mikrocontroller auf, ein Speichermedium und eine Echtzeituhr. Optional kann das Messgerät 50 ein Display 80 (siehe Fig. 1) aufweisen. Das Messgerät 50 verfügt optional über ein Drahtlos-Modul, wie beispielsweise ein WLAN-Modul, WIFI-Modul oder ein Mobilfunkmodul, über das das Messgerät 50 mit einer Datenverarbeitungsanlage (nicht gezeigt) zusammenwirkt. Es kann aber auch kabelgebunden mit einer Datenverarbeitungsanlage verbunden sein.

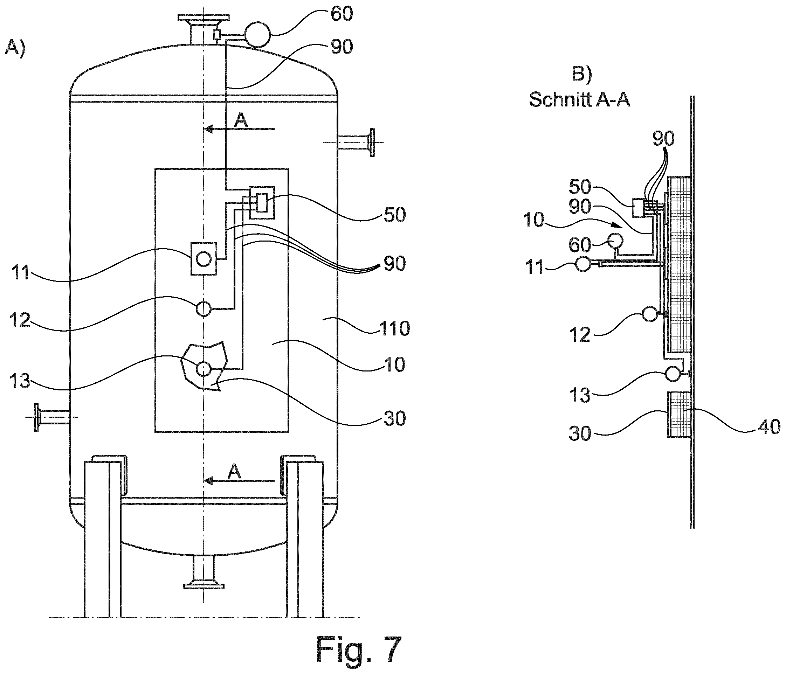

Figur 7 zeigt den Aufbau der Messeinrichtung 10 wie in Figur 6, jedoch zusätzlich enthaltend einen Luftfeuchtesensor 60. Bei dem Luftfeuchtemesser 60 handelt es sich um einen Feuchtesensor mit einem Messbereich von 0 bis 100 % Luftfeuchte. Die Messsignale werden von den Temperatursensoren 11, 12 und 13, sowie von dem Feuchtesensor 60 mittels Datenkabeln 90 zu dem Messgerät 50 übertragen und dort gespeichert und weiterverarbeitet.

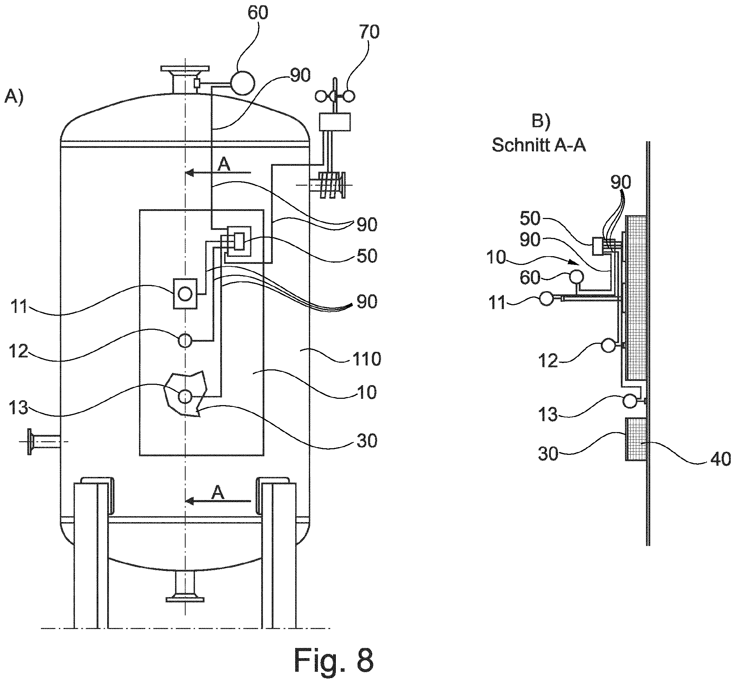

Figur 8 zeigt den Aufbau der Messeinrichtung 10 wie in Figur 7, jedoch zusätzlich enthaltend einen Windmesser 70. Bei dem Windmesser 70 handelt es sich um ein Anemometer mit einem Messbereich von 0 bis 30 m/s Windgeschwindigkeit. Die Messsignale werden von den Temperatursensoren 11, 12 und 13, dem Feuchtesensor 60 sowie von dem Windmesser 70 mittels Datenkabeln 90 zu dem Messgerät 50 übertragen und dort gespeichert und weiterverarbeitet.

Die erfindungsgemäße Messeinrichtung 10 wie in den Figuren 1 bis 8 dargestellt berechnet in einer frei wählbaren Taktung den aktuellen Wärmeverlust mit montierter Dämmung 40 und Ummantelung 30 und ohne Dämmung 40 und Ummantelung 30, und daraus die tatsächliche, bzw. potenzielle Energie- und Kosteneinsparungen, sowie eine Hochrechnung dieser Werte für einen vorgegebenen Zeitraum, wie beispielsweise ein Jahr. Diese Werte (gemessene und berechnete) werden pro Berechnungszyklus auf dem Speichermedium des Mikrocontrollers des Messgeräts 50 festgehalten und können später per elektronischer Datenverarbeitung (EDV) (z.B. Tabellenkalkulation) in Diagrammen oder anderer Form dargestellt werden. Der Mikrocontroller des Messgeräts 50 wird mit allen für den Messort nötigen individuellen Werten programmiert. Diese sind Energiekosten, Fläche oder Länge und Durchmesser der zu untersuchenden Vorrichtung, wie beispielsweise einer Rohrleitung 18, eines Behälter 110 etc., spezifische Werte des Dämmsystems (Kennzahlen des Dämmstoffs 40, Dämmdicke, Wärmeleitfähigkeit, nötige Werte der Ummantelung 30). Danach wird das Messgerät 50 an einer für die Erfassung geeigneten Stelle montiert und die Temperaturfühler 11, 12 und 13 an der Oberfläche der Vorrichtung, der Ummantelung, und für die Umgebungstemperatur installiert. Nach Inbetriebnahme des Messgerätes werden die Temperaturen an der Oberfläche der Vorrichtung, wie beispielsweise einer Rohrleitung 18, eines Behälter 110 etc., auf der Dämmung 40 bzw. Ummantelung 30 und von der Umgebung gemessen und vom Mikrocontroller des Messgeräts 50 ausgelesen. Danach beginnt die erste Berechnungsschleife, welche sich in einem frei wählbaren Intervall (z.B. aller 60 Sekunden oder 5 Minuten) wiederholt. Die Berechnungen selbst erfolgen beispielsweise nach der Richtlinie VDI 2055 Blatt 1. Durch ein optional eingebautes Display 80 werden abwechselnd die gemessenen Werte sowie die berechneten Ergebnisse angezeigt. Damit sind die erreichte Energieeinsparung seit Messungsbeginn und eine Hochrechnung auf einen vorgegebenen Zeitraum, wie beispielsweise ein Jahr, leicht verständlich und nachvollziehbare ablesbar. Für eine genauere, bzw. umfangreichere Auswertung können die Daten von der Speicherkarte des Messgeräts 50 ausgelesen und an eine Datenverarbeitungsanlage weitergeleitet bzw. von dieser weiterverarbeitet werden.

**Ausführungsbeispiel: Berechnung nach der Richtlinie VDI 2055 Blatt 1; "Effizienzmesser" bzw. "erfolgsabhängiges Finanzierungsmodel"**

| Gegeben: | Rohrleitung, warmgehend, in einer unbeheizten Lagerhalle |
|---|---|
| Rohrdurchmesser: | außen $d_{Ra}$ =114,3 mm |
| Rohrlänge: | 100 m (alle Formteile werden mit einfacher Länge übermessen; Flansche mit 0,5 m und Armaturen mit 1,0 m äquivalenter Rohrlänge je Stück addiert (Stand der Technik)) |
| Dämmstoff: | Rockwool Drahtnetzmatte mit 40 mm Dämmdicke |
| | Durchmesser mit Dämmung $d_a$= 194,3mm |
| | Koeffizientenformel für $\lambda = a_0 + a_1{}^*T_m + a_2{}^*T_m{}^\wedge 2 + a_3{}^*T_m{}^\wedge 3$ |
| | Koeffizient $a_0$ = 0,0321752691085323 |
| | Koeffizient $a_1$ = 0,000122196270366336 |
| | Koeffizient $a_2$ = 8,92380019300296E-08 |
| | Koeffizient $a_3$ = 2,51323665816032E-10 |
| | Tm = Temperaturmittel aus Oberflächen- und Objekttemperatur |

Wärmeleitfähigkeit $\lambda$: wird über Koeffizientenformel berechnet

Der innere Wärmeübergang kann bei diesen Berechnungen vernachlässigt werden, da Medium und Rohr nahezu die gleiche Temperatur aufweisen. Für die Berechnung des äußeren Wärmeübergangs werden Angaben zu den Windverhältnissen (gemessen über Anemometer oder bei Innenanlagen auf 0 m/s gesetzt) sowie die Strahlungskoeffizienten der Isolierungsummantelung und des Medienrohres (stoffabhängig) benötigt.

Im Beispiel sind dies:

Wind: 0 m/s (Innenanlage)

Strahlungskoeffizient Ummantelung: $C_{12}$ = 0,28 W/m$^2$*K für Aluminiumblech

Strahlungskoeffizient Rohrleitung: $C_{12}$ = 2,49 W/m$^2$*K für Stahl. unlegiert

Zur Hochrechnung der Energieeinsparung wird eine zu erwartende Betriebsstundenzahl pro Jahr und ggf. eine Anlagenlebensdauer benötigt. Im Beispiel sind dies 8.500 Stunden.

Für die Einsparung an $CO_2$ wird eine Angabe des verwendeten Brennstoffes benötigt, (Stoffabhängig). Im Beispiel sind dies 220 g /kWh (Erdgas).

Für die Berechnung der Kosteneinsparung wird der Preis für die Erzeugung der Energie (Brennstoffpreis, Wartung, Abschreibung und Bedienpersonal der Energieerzeugungsanlage) mindestens aber der Brennstoffpreis je kWh bzw. MWh benötigt. Im Beispiel sind dies 0,04 € /kWh.

Die 3 Temperaturen für Oberfläche Objekt, Umgebung und Oberfläche Dämmung werden durch die 3 Temperaturfühler gemessen, vom Microcontroller ausgelesen und zur Berechnung genutzt.

Im Beispiel sind dies: Oberfläche Dämmung (To): 19,4°C

Umgebung (Luft) ($T_L$): 10°C

Oberfläche Objekt (Rohr) ($T_R$): 60°C

Zur Berechnung: Aus $T_m = \dfrac{T_R + T_O}{2}$ und der Formel $a_0 + a_1{}^*T_m + a_2{}^*T_m{}^\wedge 2 + a_3{}^*T_m{}^\wedge 3$ ergibt sich

$\lambda = 0{,}037 \dfrac{W}{m*K}$. Da es sich im Beispiel um ein waagerechtes Rohr mit freier Konvektion (ohne Wind) handelt, kommt folgende Formel zum Einsatz:

$$\alpha_{kf} = 1{,}22 \cdot \sqrt[4]{\dfrac{\Delta\vartheta}{d_{ai}}} \qquad \text{Ergebnis 3,18 W/m²K}$$

Für den Anteil des Wärmeüberganges aus Strahlung wird folgende Formel verwendet:

$$\alpha_{Sa} = C_{12} \cdot \frac{(T_O)^4 - (T_L)^4}{\vartheta_O - \vartheta_L}$$

Ergebnis 0,27 W/m²K

Zum Berechnen des Gesamtwärmeüberganges wir folgende Formel eingesetzt:

$$\alpha_a = \alpha_{kf} + \alpha_{sa}$$

Ergebnis 3,45 W/m²K

Damit kann nun der Wärmeverlust je Meter gedämmtes Rohr berechnet werden:

$$\dot{q}_{RmI} = \frac{(\vartheta_R - \vartheta_L) \cdot \pi}{\frac{1}{2 \cdot \lambda_B} \cdot \ln\frac{d_{ai}}{d_a} + \frac{1}{\alpha_a \cdot d_{ai}}}$$

Ergebnis 18,11 W/m

Die hier aufgeführten Formeln sind nur die, die für dieses Beispiel benötigten werden. Gegebenenfalls muss je nach Einbausituation ein Zuschlagfaktor "f-Gesamt" für die Wärmeleitfähigkeit berücksichtigt werden. (Quelle: VDI 2055; hier die Formel 27, 44, 45 und 46).

Nun kann für das betrachtete System der Gesamtwärmeverlust berechnet werden. Aus der Rohrleitungslänge von 100 m und den 8.500 Betriebsstunden ergeben sich jährliche Energieverluste von 15.39 MWh pro Jahr am gedämmten Rohr.

Mittels einer Software wird aus den erfolgten Messungen und Berechnungen permanent ein neuer Durchschnitt gebildet und damit die Hochrechnung auf die 8.500 Stunden neu berechnet. Bei gleichlaufenden Prozessen kann damit schon nach kurzer Zeit mit einer guten Genauigkeit eine Hochrechnung für ein Jahr bereitgestellt werden.

Um die Ersparnisse zu bestimmen, muss parallel der Wärmeverlust ohne Dämmung berechnet werden. Dazu werden der Durchmesser des Rohres ohne Dämmung, die Oberflächentemperatur am Objekt, der Strahlungskoeffizient $C_{12}$ des Rohrwerkstoffes und die Umgebungstemperatur benötigt. Mit diesen Werten wird der äußere Wärmeübergang und damit der Wärmeverlust je ungedämmten Rohrmeter berechnet.

$$\dot{q}_{RoI} = \frac{(\vartheta_i - \vartheta_a) \cdot \pi}{\frac{1}{\alpha_a \cdot d_{Ra}}}$$

Formel Wärmeverlust ohne Dämmung:

Der Wärmeverlust am ungedämmten Rohr beträgt 152,43 W/m. Dies wieder auf das Gesamtsystem 100 m und 8500 Betriebsstunden bezogen, ergibt 129.57 MWh. Auch hier wird mit jeder neuen Berechnung ein neuer Durchschnittswert berechnet, um auf ein ganzes Jahr hochrechnen zu können.

Aus der Differenz der beiden Verluste kann nun die Einsparung an Energie; multipliziert mit dem Preis für 1 kWh der monetäre Effekt und multipliziert mit dem brennstoffabhängigen $CO_2$-Verbrauch, dessen Einsparung berechnet werden.

Für die gegebenen Werte von 0,04 €/kWh und 220 g/kWh ergeben sich folgende Ergebnisse

| | |
|---|---|
| Energieeinsparung: | 114,18 MWh/Jahr |
| Kosteneinsparung: | 4.567 €/Jahr |
| $CO_2$-Einsparung: | 25,12 Tonnen |

Da die Betriebszustände und Umgebungsbedingungen und sämtliche weitere Einflüsse (Betriebsstillstände, Produktionszyklen, Witterungseinflüsse, Tag-Nachtwechsel) permanent erfasst werden und in die Berechnung einfließen, ergibt sich ein sehr aussagekräftiges Ergebnis. Für das erfolgsorientierte Finanzierungsmodel kann entweder ein Jahr oder einen Monat als Abrechnungsintervall gewählt werden.

Liste der Bezugzeichen

| | |
|---|---|
| 10 | Messeinrichtung |
| 11 | der Temperatursensor für die Umgebungstemperatur |
| 12 | Temperatursensor auf der Oberfläche der Ummantelung |
| 13 | Temperatursensor auf der Oberfläche der Vorrichtung |
| 14 | Blindnieten |
| 15 | Schrauben |
| 16 | Kniehebelverschluss |
| 17 | Befestigung für Temperatursensor für die Umgebungstemperatur |
| 18 | Rohrleitung |
| 19 | Befestigung für das Messgerät |
| 20 | Befestigung für den Windmesser |
| 30 | Ummantelung |
| 40 | Dämmung, Dämmstoff |
| 50 | Messgerät |
| 60 | Luftfeuchtemesser, Anemometer |
| 70 | Windmesser |
| 80 | Display |
| 90 | Datenleitungen |
| 100 | ebene Fläche |
| 110 | Behälter |

**Patentansprüche**

1. Messeinrichtung (10) zur Bestimmung der Energieeffizienz einer Vorrichtung, aufweisend

   • ein Messgerät (50),
   • eine Ummantelung (30) für die Vorrichtung,
   • mindestens drei Temperaturfühler (11, 12, 13),
   • einen Windmesser (70), und
   • einen Luftfeuchtesensor (60).

2. Messeinrichtung (10) nach Anspruch 1, wobei das Messgerät (50) einen Mikrocontroller, ein Speichermedium, eine Echtzeituhr und optional ein Display (80) und optional ein Modul für eine Datenverbindung aufweist.

3. Messeinrichtung (10) nach einem der vorherigen Ansprüche, **dadurch gekennzeichnet, dass** die mindestens drei Temperaturfühler einen Temperaturfühler (13) an der Oberfläche der Vorrichtung, einen Temperaturfühler (12) an der Oberfläche der Ummantelung (30) und einen Temperaturfühler (11) für die Messung der Umgebungstemperatur umfassen.

4. Messeinrichtung (10) nach einem der vorherigen Ansprüche, **dadurch gekennzeichnet, dass** die Messeinrichtung (10) vier Temperaturfühler aufweist, wobei der erste Temperaturfühler an der Oberfläche der Vorrichtung direkt unterhalb der zumindest teilweisen Ummantelung (30) angebracht ist, der zweite Temperaturfühler (12) auf der Oberfläche der zumindest teilweisen Ummantelung (30) angebracht ist, ein dritter Temperaturfühler (11) dafür vorgesehen ist, unabhängig von der Vorrichtung und von der Ummantelung (30) die Umgebungstemperatur zu messen, und ein vierter Temperaturfühler (13) auf der Oberfläche der Vorrichtung in einem ungedämmten Bereich angebracht ist.

5. Messeinrichtung (10) nach einem der vorherigen Ansprüche, **dadurch gekennzeichnet, dass** die Vorrichtung eine Anlage, ein Behälter (100) oder eine Rohrleitung (18) bzw. ein Rohrleitungssystem ist.

6. Anlage umfassend eine Messeinrichtung (10) nach einem der vorherigen Ansprüche.

7. Messeinrichtung (10) oder Anlage nach einem der vorherigen Ansprüche, **dadurch gekennzeichnet, dass** die Ummantelung (30) aus einem Material besteht, das ausgewählt ist aus Stahlblech, Zinkblech, Edelstahlblech, Aluminiumblech und Kunststoffmaterialien, und dass die Ummantelung (30) eine Dämmung (40) mit einer eine Dicke im Bereich von 0,9 und 100 cm aufweist.

8. Messeinrichtung (10) oder Anlage nach einem der vorherigen Ansprüche, **dadurch gekennzeichnet, dass** die Dämmung (40) eine Wärmedämmung ist und der Dämmstoff ausgewählt ist aus Mineralwolle Calcium-Magnesium-Silikatfaser, Aluminium-Silikat-Wolle, Calciumsilikat, Erdalkali-Silikat-Wolle, mikroporösen Dämmstoffen, Polyurethan-/Polyisocyanurat-Hartschaum, Polyurethan-Ortschaum, Polystyrol-Partikelschaum, Polystyrol-Extruderschaum, Dämmen mit Schaumglas, Elastomerschaum, Polyethylenschaum, Phenolharzschaum, Melaminharzschaum und Blähperlit;
oder
dass die Dämmung (40) eine Kältedämmung ist und der Dämmstoff ausgewählt ist aus Mineralwolle und anderen faserigen oder offenzelligen Dämmstoffen, Polyurethan-/Polyisocyanurat-Hartschaum, Polyurethan-Ortschaum, Polystyrol-Partikelschaum, Polystyrol-Extruderschaum, Schaumglas, Elastomerschaum, Polyethylenschaum, Phenolharzschaum und Blähperlit.

9. Verfahren zur Bestimmung der Energieeffizienz einer Vorrichtung mit einer Messeinrichtung (10) nach einem der vorherigen Ansprüche, umfassend die Schritte

   • Programmierung des Mikrokontrollers des Messgeräts (50),
   • Montieren der Messeinrichtung (10) nach einem der vorherigen Ansprüche an der Vorrichtung,
   • Installieren des Temperaturfühlers (13) der Messeinrichtung (10) an der Vorrichtung;
   • Anbringen eine Ummantelung (30) und einer Dämmung (40) an der Vorrichtung;
   • Installieren des Temperaturfühlers (12) an der Ummantelung und des Temperaturfühlers (11) für die Messung der Umgebungstemperatur an der Vorrichtung,
   • Messen der Temperaturen an der Oberfläche der Vorrichtung, auf der Ummantelung (30) und der Umgebung und Auslesen der Messwerte mit dem Mikrokontroller des Messgeräts (50),
   • Berechnung der Energieeinsparung in einem vorgegebenen Intervall,
   • Optional Anzeigen der gemessenen Werte sowie der berechneten Ergebnisse mit einem Display (80).

10. Verfahren nach Anspruch 9, **dadurch gekennzeichnet, dass** der Mikrokontroller des Messgeräts (50) mit allen für den Messort nötigen individuellen Werten, wie Energiekosten, Fläche oder Länge und Durchmesser des zu messenden Rohrleitungssystems, Abmessungen des Behälters, spezifischen Werten des Dämmsystems, wie Kennzahlen des Dämmstoffs (40) oder der Dämmstoffe (40) bei Mehrlagigkeit, Dämmdicke, Wärmeleitfähigkeit und nötige Werte der Ummantelung (30), programmiert wird.

11. Verfahren nach Anspruch 9 oder 10, weiterhin umfassend das Installieren eines Luftfeuchtesensors (60) an der Vorrichtung und/oder das Installieren eines Windmessers (70) an der Vorrichtung.

12. Verfahren nach einem der Ansprüche 9 bis 11, weiterhin umfassend das Messen der Luftfeuchte mit dem Luftfeuchtesensor (60) und/oder der Windgeschwindigkeit mit dem Windmesser (70) an der Vorrichtung und Auslesen der Messwerte mit dem Mikrokontroller des Messgeräts (50).

13. Verfahren nach einem der Ansprüche 9 bis 12, **dadurch gekennzeichnet, dass** die Messdaten der Temperatursensoren (11, 12, 13) und/oder die Messdaten des Luftfeuchtesensors (60) und/oder des Windmessers (70) und/oder die von dem Mikrocontroller weiterverarbeiteten Daten in einer Cloud gespeichert werden.

14. Verfahren nach einem der Ansprüche 9bis 13, **dadurch gekennzeichnet, dass** die Berechnung der Energieeinsparung die folgenden Schritte umfasst

   • Berechnung des Gesamtwärmeverlusts der zu betrachtenden gedämmten Vorrichtung in einem vorgegebenen Intervall;
   • Berechnung des Wärmeverlusts der ungedämmten Vorrichtung;
   • Bildung der Differenz von Gesamtwärmeverlust der gedämmten Vorrichtung und des Wärmeverlusts der ungedämmten Vorrichtung; und
   • Berechnung der Einsparung an Energie und $CO_2$-Verbrauch anhand der ermittelten Differenz.

15. Verfahren nach einem der Ansprüche 9 bis 14, **dadurch gekennzeichnet, dass** mittels einer Software der erfindungsgemäßen Messeinrichtung aus den erfolgten Messungen und Berechnungen in Echtzeit neue Durchschnittswerte des Gesamtwärmeverlusts der gedämmten Vorrichtung und des Wärmeverlusts der ungedämmten Vorrichtung gebildet und eine aktuelle Hochrechnung für den Energieverlust in einem vorgegebenen Zeitintervall bereitgestellt wird.

EP 3 550 274 A1

# FIG 1

EP 3 550 274 A1

FIG 2

FIG 3

FIG 4

EP 3 550 274 A1

FIG 5

A)

B)
Schnitt A-A

FIG 6

A)

B)

Schnitt A-A

50

90

11    90

12    110

13    10

30    40

10    50

11

12

13

30

EP 3 550 274 A1

Fig. 7

EP 3 550 274 A1

Fig. 8

EP 3 550 274 A1

**Europäisches Patentamt**
**European Patent Office**
**Office européen des brevets**

# EUROPÄISCHER RECHERCHENBERICHT

Nummer der Anmeldung

EP 19 16 6763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/264399 A1 (THAYER SCOTT M [US] ET AL) 27. Oktober 2011 (2011-10-27) * Zusammenfassung; Abbildungen 1-6 * * Absätze [0002], [0021] - [0036], [0043], [0046] * ----- | 1-15 | INV. G01K17/20 |
| A,D | CN 202 216 927 U (TAICANG INST OF MEASUREMENT AND TESTING) 9. Mai 2012 (2012-05-09) * das ganze Dokument * ----- | 1-15 | |
| A | US 2017/089771 A1 (AHMAD AFTAB [SA]) 30. März 2017 (2017-03-30) * Zusammenfassung; Abbildung 1 * * Absätze [0002], [0008] - [0012], [0046] - [0052] * ----- | 1-15 | |

**RECHERCHIERTE SACHGEBIETE (IPC)**

G01K
G01N
G01M

Der vorliegende Recherchenbericht wurde für alle Patentansprüche erstellt

| Recherchenort | Abschlußdatum der Recherche | Prüfer |
|---|---|---|
| Den Haag | 27. August 2019 | de Bakker, Michiel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 16 6763

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2019

| Im Recherchenbericht angeführtes Patentdokument | Datum der Veröffentlichung | Mitglied(er) der Patentfamilie | Datum der Veröffentlichung |
|---|---|---|---|
| US 2011264399 A1 | 27-10-2011 | US 2011264399 A1<br>US 2017016782 A1 | 27-10-2011<br>19-01-2017 |
| CN 202216927 U | 09-05-2012 | KEINE | |
| US 2017089771 A1 | 30-03-2017 | US 2017089771 A1<br>US 2018252599 A1 | 30-03-2017<br>06-09-2018 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2907215
- CN 104076062 A
- CN 106547945 A
- CN 202216927 U